# EUROPÄISCHE PATENTSCHRIFT

(11) **EP 0 872 659 B1**
(45) Veröffentlichungstag und Bekanntmachung des Hinweises auf die Patenterteilung: **01.09.2004**
(21) Anmeldenummer: 98107152.5
(22) Anmeldetag: 20.04.1998
(51) Int. Cl.: F16D 65/12

(54) **Bremsscheibe, insbesondere eine innenbelüftete Bremsscheibe**
Brake disc, in particular internally ventilated brake disc
Disque de frein, en particulier à ventilation interne

(30) Priorität: 19.04.1997 DE 19716568; 08.04.1998 DE 19815807
(43) Veröffentlichungstag der Anmeldung: 21.10.1998
(73) Patentinhaber: Dr.Ing.h.c. F. Porsche Aktiengesellschaft, 70435 Stuttgart (DE)
(72) Erfinder: Martin, Roland, 71287 Weissach (DE)

(56) Entgegenhaltungen:
- EP-A- 0 127 932
- EP-A- 0 291 697
- EP-A- 0 564 942
- EP-A- 0 718 521
- DE-A- 1 775 685
- DE-A- 19 533 571
- GB-A- 2 132 290
- US-A- 4 132 294
- US-A- 4 790 413

## Beschreibung

Die Erfindung bezieht sich auf eine Bremsscheibe, insbesondere innenbelüftete Bremsscheibe, nach dem Oberbegriff des Anspruchs 1.

Aus der EP 0 718 521 A1 ist eine Bremsscheibe, insbesondere eine innenbelüftete Bremsscheibe bekannt, bei der ein Bremsring mit einem Bremsscheibentopf über Befestigungsschrauben verbunden ist. Die Schrauben sind jeweils in Hülsen gehalten. Diese Hülsen weisen einen Überstand auf und mittels einer zwischengeschalteten Tellerfeder, welche von einem Kopf einer Befestigungsschraube beaufschlagt wird, erfolgt eine Verspannung der beiden zu verbindenden Bremsscheibenteile.

Die DE-0S 1 775 685 zeigt eine Bremsscheibe bestehend aus einem Bremstopf und einem hiermit über axial angeordnete Gummi - Metall - Lager Bremsring. Das Gummi - Metall - Lager ist durch eine Schraube am Bremstopf befestigt und mit seiner Außenhülse in entsprechende Ausnehmungen des Bremsringes eingesetzt.

Aufgabe der Erfindung ist es, eine verbesserte Verbindung eines Bremsscheibenringes mit einem Bremsscheibentopf zu schaffen, mit der ein Bremsenquietschen vermieden bzw. weitestgehend unterbunden wird.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch eine Niet verbindung eine Bedämpfung von axialen Schwingungsanregungen beim Bremsvorgang erzielt wird, wobei diese Verbindung einen definierten Abstand zwischen einem Kopf der Verbindung und einer Verbindungsfläche am Bremsentopf oder Bremsenring bedingt.

Insbesondere tritt eine Bedämpfungswirkung durch Trennung der Bremsscheibenteile, wie dem Bremsscheibenring und dem Bremsscheibentopf sowie durch eine definierte Vorspannung des Bremsscheibenringes und -topfes durch Variation des Überstandes einer verwendeten Hülse bis gegen Null in Zusammenhang mit der Nietverbindung ein.

Des weiteren wird der Effekt der Bedämpfung durch Einbringung eines hochdämpfenden Materials zwischen den beiden aufeinanderliegenden Ringflächen des Bremsscheibenringes und -topfes ermöglicht.

Der Hülsenüberstand beträgt nur wenige hunderstel Millimeter und der Schließkopf bzw. der Kopf des Nietes übergreift das Hülsenstirnende, so daß ein Zwischenraum verbleibt. In jedem Fall ist ' gewährleistet, daß zwischen Bremsscheibenring und Bremsscheibentopf hinsichtlich einer Schwingungsanregung eine Trennung erfolgt und die Bremsscheibenteile schwingungstechnisch voneinander abkoppelbar sind, d.h., daß die aufeinanderliegenden Ringflächen des Bremsscheibentopfes und des Bremsscheibenringes eine minimale mögliche Bewegungsmöglichkeit zueinander aufweisen.

Ausführungsbeispiele der Erfindungen sind in den Zeichnungen dargestellt und werden im folgenden näher beschrieben.

Es zeigen
- Fig. 1: eine Verbindung zwischen Bremsscheibentopf und Bremsring im Schnitt,
- Fig. 2: eine weitere Ausführung einer Anordnung des Bremsscheibentopfes zum Bremsring, und
- Fig. 3: eine vergrößerte Einzelheit X des Hülsenüberstandes.

Eine innenbelüftete Bremsscheibe 1 umfaßt zwei miteinander über Rippen 4 verbundene Bremsringe 2, 3, die an einem Bremsscheibentopf 5 über Verbindungselemente 6 befestigbar sind.

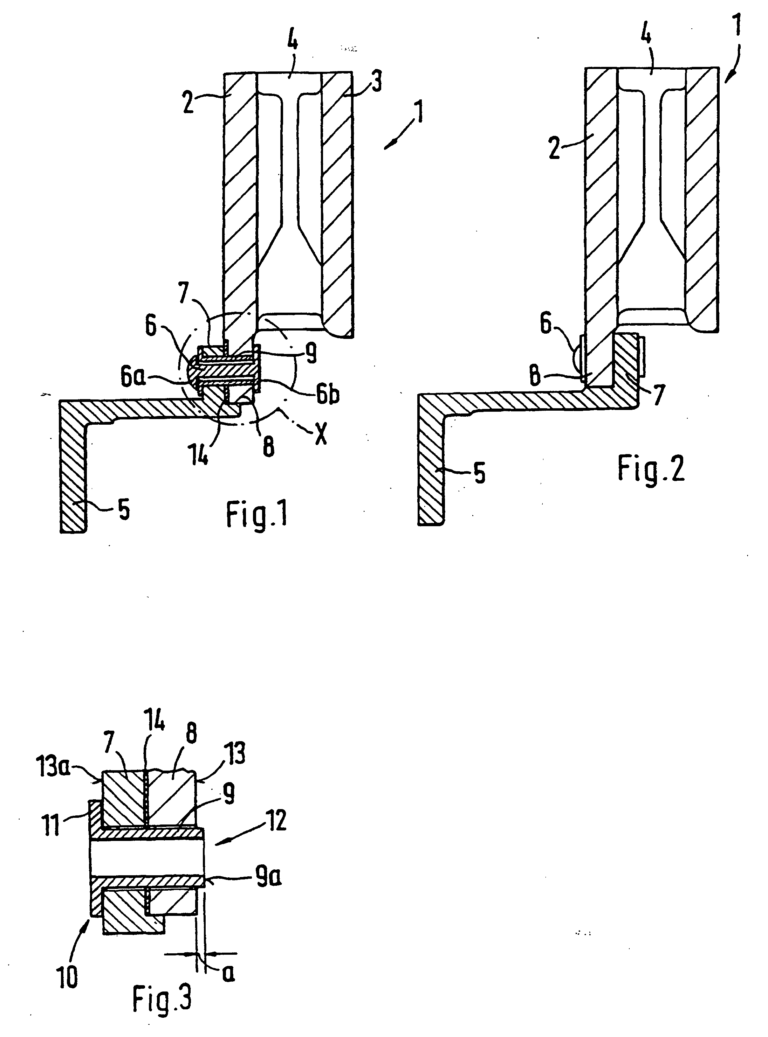

Zum Befestigen des Bremsringes 2 am Bremsscheibentopf 5 sind an jedem Bremsenteil 2, 5 ein Ringsteg 7, 8 vorgesehen, die gegenüberstehend miteinander verbunden sind. Der Ringsteg 8 kann innenliegend gemäß Fig. 1 oder außenliegend gemäß Fig. 2 des Ringsteges 7 des Bremsscheibentopfes 5 angeordnet sein.

Die Verbindung der beiden Bremsenteile 5 und 2 erfolgt gemäß den Fig. 1 bis 3 über Niete 6, wobei jedes Niet 6 in einer Hülse 9 angeordnet ist. Diese Hülse 9 durchdringt Bohrungen in den Ringstegen 7, 8 der Bremsenteile 2 und 5 und stützt sich mit ihrem einen Ende 10 über einen Rand 11 an einem Ringsteg 7 oder 8 ab. Das andere abgekehrte freie Ende 12 der Hülse 9 ist mit einem Überstand a zur Außenoberfläche 13 des Ringsteges 7 oder 8 ausgeführt, wie Fig. 3 in einer Vergrößerung näher zeigt. Bei einer Vernietung bleibt dieser Spalt bestehen, der etwa zwei hunderstel Millimeter beträgt bzw. in einem Bereich von 2 bis 5/100 mm liegt. Dieses Maß wird entsprechend den Gegebenheiten definiert und kann gegen Null gehen.

Die Nietung erfolgt so, daß der Kopf 6a auf dem Rand 11 aufliegt und der Schließkopf 6b den überstehenden Teil der Hülse übergreift. Es wäre aber auch eine umgekehrte Anordnung des Nietes 6 möglich, so daß der Kopf 6a das freie Ende der Hülse 9 übergreift und der Schließkopf 6b den Rand 11 abdeckt.

Zwischen den gegenüberstehenden Verbindungsflächen der Ringstege 7 und 8 ist ein hochdämpfendes Material in Form eines Dämpfungsbleches 14 vorgesehen, das beispielsweise eine elastomere Schicht an beiden Seiten aufweist

## Patentansprüche

1. Bremsscheibe, insbesondere innenbelüftete Bremsscheibe (1), mit mindestens einem Bremsring (2, 3), der über Verbindungselemente (6) mit einem Bremsscheibentopf (5) verbunden ist, wobei die Verbindungselemente(6) konzentrisch zum Bremsscheibentopf (5) angeordnet sind und die Verbindungselemente (6) sich überlappende Ringstege (7, 8) des Bremsringes (2, 3) und des Bremsscheibentopfes (5) durchdringen, **dadurch gekennzeichnet, daß** der Bremsring (2) mit dem Bremsscheibentopf (5) über Niete (6) verbunden ist, welche jeweils in einer Hülse (9) mit einem endseitigen Überstand (a) zur Außenfläche (13, 13a) des Ringsteges (7 oder 8) angeordnet sind und ein in Hülsen gehaltener Niet- bzw. Schließkopf (6a bzw. 6b) die überstehende Hülsenstirnfläche (9a) zur Befestigung übergreift.

2. Bremsscheibe nach Anspruch 1, **dadurch gekennzeichnet, daß** die Hülse (9) an einem Ende (10) einen dem Nietkopf (6a) bzw. den Schließkopf (6b) zugerichteten Rand (11) als Abstütz- und Anlagefläche aufweist und das abgekehrte andere Ende (12) mit dem Überstand (a) ausgebildet ist und dieser in Abhängigkeit von einer definierten Vorspannung der Verbindung des Bremsringes (2) mit dem Bremsscheibentopf (5) ausgeführt ist.

3. Bremsscheibe nach den Ansprüchen 1 oder 2, **dadurch gekennzeichnet, daß** zwischen den sich überlappenden Ringstegen (7, 8) des Bremsscheibentopfes (5) und des Bremsringes (2) der Bremsscheibe (1) ein hochdämpfendes Material angeordnet ist.

4. Bremsscheibe nach Anspruch 3, **dadurch gekennzeichnet, daß** das hochdämpfende Material auf einem mit elastischen Schichten versehenen Dämpfungsblech (14) angeordnet ist.

5. Bremsscheibe nach den Ansprüchen 1, 2, 3 oder 4, **dadurch gekennzeichnet, daß** der Ringsteg (8) des Bremsringes (2) innen- oder außenseitig des Ringsteges (7) des Bremsscheibentopfes (5) angeordnet ist.

6. Bremsscheibe nach einem oder mehreren der vorhergehenden Ansprüche, **dadurch gekennzeichnet, daß** der Hülsenüberstand (a) etwa 2/100 mm bis 5/100 mm beträgt.

7. Bremsscheibe nach einem oder mehreren der vorhergehenden Ansprüche, **dadurch gekennzeichnet, daß** der Hülsenüberstand (a) etwa 1/100 mm beträgt.

8. Bremsscheibe nach einem oder mehreren der vorhergehenden Ansprüche, **dadurch gekennzeichnet, daß** zwischen den Ringstegen (7, 8) ein beidseitig beschichtetes Dämpfungsblech (14) vorgesehen ist.

## Claims

1. A brake disc, in particular an internally ventilated brake disc (1), with at least one brake ring (2, 3) which is connected to a brake-disc chamber (5) by way of connecting elements (6), wherein the connecting elements (6) are arranged concentrically to the brake-disc chamber (5) and the connecting elements (6) pass through mutually overlapping annular webs (7, 8) of the brake ring (2, 3) and of the brake-disc chamber (5), **characterized in that** the brake ring (2) is connected to the brake-disc chamber (5) by way of rivets (6) which are each arranged in a respective sleeve (9) with an excess (a) at the end with respect to the outer face (13, 13a) of the annular web (7 or 8), and a rivet head or closure head respectively (6a or 6b) held in sleeves engages over the excess end face (9a) of the sleeve for fastening purposes.

2. A brake disc according to Claim 1, **characterized in that** at one end (10) the sleeve (9) has an edge (11) directed towards the rivet head (6a) or the closure head (6b) respectively as a support and abutment face and the other end (12) directed away is formed with the excess (a) and the said excess (a) is designed in a manner dependent upon a defined prestressing of the connexion of the brake ring (2) to the brake-disc chamber (5).

3. A brake disc according to Claims 1 or 2, **characterized in that** a material of high damping capacity is arranged between the mutually overlapping annular webs (7, 8) of the brake-disc chamber (5) and of the brake ring (2) of the brake disc (1).

4. A brake disc according to Claim 3, **characterized in that** the material of high damping capacity is arranged on a damping metal sheet (14) provided with resilient layers.

5. A brake disc according to Claims 1, 2, 3 or 4, **characterized in that** the annular web (8) of the brake ring (2) is arranged on the inside or the outside of the annular web (7) of the brake-disc chamber (5).

6. A brake disc according to one or more of the preceding Claims, **characterized in that** the sleeve excess (a) amounts to from approximately 2/100 mm to 5/100 mm.

7. A brake disc according to one or more of the preceding Claims, **characterized in that** the sleeve excess (a) amounts to approximately 1/100 mm.

8. A brake disc according to one or more of the preceding Claims, **characterized in that** a damping metal sheet (14) coated on both sides is provided between the annular webs (7, 8).

## Revendications

1. Disque de frein, en particulier disque de frein (1) ventilé de l'intérieur, avec au moins un anneau de frein (2, 3) qui est relié par des éléments de liaison (6), à un pot (5) du disque de frein, les éléments de liaison (6) étant disposés concentriquement au pot (5) et les éléments de liaison (6) traversant des pattes annulaires (7, 8) se chevauchant de l'anneau de frein (2, 3) et du pot (5), **caractérisé en ce que** l'anneau de frein (2) est relié au pot (5) du disque de frein par des rivets (6) qui sont disposés chacun dans une douille (9) avec porte-à-faux (a) d'extrémité par rapport à la surface extérieure (13, 13a) de la patte annulaire (7 ou 8), et une tête de rivet ou de fermeture (6a ou 6b), maintenue dans des douilles, passe sur la surface frontale (9a) dépassante de la douille, pour la fixation.

2. Disque de frein selon la revendication 1, **caractérisé en ce que** la douille (9) présente, à une extrémité (10), un bord (11) orienté vers la tête de rivet (6a) ou la tête de fermeture (6b), servant de surface d'appui et de surface de contact, et l'autre extrémité (12) opposée est réalisée avec le porte-à-faux (a) et celui-ci constitue un critère d'une précontrainte définie de la liaison entre l'anneau de frein (2) et le pot (5) du disque de frein.

3. Disque de frein selon les revendications 1 ou 2, **caractérisé en ce qu'**un matériau hautement amortisseur est disposé entre les pattes annulaires (7, 8) se chevauchant du pot (5) et de l'anneau de frein (2) du disque de frein (1).

4. Disque de frein selon la revendication 3, **caractérisé en ce que** le matériau hautement amortisseur est disposé sur une tôle d'amortissement (14) pourvue de couches élastiques.

5. Disque de frein selon les revendications 1, 2, 3 ou 4, **caractérisé en ce que** la patte annulaire (8) de l'anneau de frein (2) est disposée sur le côté intérieur ou le côté extérieur dé la patte annulaire (7) du pot (5) du disque de frein.

6. Disque de frein selon une ou plusieurs des revendications précédentes, **caractérisé en ce que** le porte-à-faux (a) de la douille est compris entre environ 2/100 mm et 5/ 100 mm.

7. Disque de frein selon une ou plusieurs des revendications précédentes, **caractérisé en ce que** le porte-à-faux (a) de la douille est d'environ 1/100 mm.

8. Disque de frein selon une ou plusieurs des revendications précédentes, **caractérisé en ce qu'**une tôle d'amortissement (14) présentant un revêtement sur les deux faces est prévue entre les pattes annulaires (7, 8).
